# EUROPEAN PATENT APPLICATION

(11) **EP 4 778 746 A1**
(43) Date of publication of application: **22.07.2026**
(21) Application number: 26150936.8
(22) Date of filing: 09.01.2026
(51) Int. Cl.: B60H 1/00, B60H 1/32

(54) **VEHICLE THERMAL MANAGEMENT SYSTEM**

(30) Priority: 17.01.2025 JP 2025007104
(71) Applicant: MAZDA MOTOR CORPORATION, Hiroshima 730-8670 (JP)
(72) Inventor: Tatsunori, Kiyomihara, Aki-gun, Hiroshima, 730-8670 (JP); Shutaro, Yamada, Aki-gun, Hiroshima, 730-8670 (JP); Yasuhiko, Nakahara, Aki-gun, Hiroshima, 730-8670 (JP)
(74) Representative: Lorenz Seidler Gossel Part. mbB

(57) **Abstract**

A thermal management system S includes a refrigerant circuit 20, a chiller 30, a first circuit 100 that performs temperature adjustment of a battery B, a second circuit 200 that performs temperature adjustment of a drive device E, a third circuit 300 including a radiator 301, and a fourth circuit 400 connected to the chiller 30. A control unit 600 causes battery cooling in which the first circuit 100 and the fourth circuit 400 are connected and drive device cooling in which the second circuit 200 and the third circuit 300 are connected to be executed. During the execution of the battery cooling and the drive device cooling, the control unit 600 executes heat absorption inhibition control that inhibits heat dissipated from the outdoor condenser 23 from being absorbed by the radiator 301.

## Description

The present disclosure relates to a vehicle thermal management system that is mounted on, for example, an electric vehicle.

### [Background Art]

In Japanese Patent Laid-Open No. 2024-127460 a thermal management system for an electric vehicle that supplies electric power from a vehicle battery to a driving motor and travels using the motive power of the driving motor is disclosed.

The thermal management system of Japanese Patent Laid-Open No. 2024-127460 includes a refrigeration cycle through which a refrigerant circulates, a battery temperature adjustment circuit through which a coolant circulates, and a chiller that is connected to the refrigeration cycle and the battery temperature adjustment circuit. In the chiller, the coolant circulating through the battery circuit and the refrigerant circulating through the refrigeration cycle can exchange heat. The thermal management system of Japanese Patent Laid-Open No. 2024-127460also includes a low-temperature circuit including a radiator for cooling a drive device as a circuit independent of the battery temperature adjustment circuit.

By including the chiller that is connected to the battery temperature adjustment circuit and the refrigeration cycle, the vehicle thermal management system not only enables temperature adjustment of a battery using the coolant in the battery temperature adjustment circuit whose temperature has been adjusted by exchanging heat with the refrigerant of the refrigeration cycle, but also enables waste heat on the battery temperature adjustment circuit side to be effectively used for heating in the refrigeration cycle, leading to a reduction in power consumption. In addition, since the battery temperature adjustment circuit and the low-temperature circuit that cools the drive device are independent circuits, it is possible to separately perform temperature adjustment of the battery using the battery temperature adjustment circuit and temperature adjustment of the drive device using the low-temperature circuit, and as a result, thermal management of the battery and the drive device can be appropriately performed.

When the heat generation amount of the battery is large, for example, the amount of heat absorbed by the refrigerant of the refrigeration cycle from the coolant through the chiller increases, and as a result, the heat dissipation amount from an outdoor condenser of the refrigeration cycle increases. Since the outdoor condenser is disposed outside the vehicle together with the radiator of the low-temperature circuit, there is a possible case in which the radiator may absorb waste heat of the outdoor condenser, in which case a reduction in the heat dissipation capability of the radiator may be caused. The reduction in the heat dissipation capability of the radiator may constitute an obstacle to thermal management of the drive system.

The present disclosure has been made in view of such a point, and an object thereof is to inhibit the radiator from absorbing waste heat of the outdoor condenser during cooling of the battery through the chiller and enable thermal management of the drive device to be appropriately performed.

In order to achieve the object described above, in an aspect of the present disclosure, a vehicle thermal management system mounted on a vehicle that travels by supplying electric power of a battery to a drive device can be assumed. The vehicle thermal management system includes: a refrigerant circuit including a compressor that compresses a refrigerant, an outdoor condenser into which the refrigerant compressed by the compressor flows, and a chiller expansion valve that expands the refrigerant flowing out of the outdoor condenser; a chiller connected between the chiller expansion valve and the compressor in the refrigerant circuit; a first circuit that is configured to allow a heating medium to flow therethrough and performs temperature adjustment of the battery using the heating medium flowing therethrough; a second circuit that is configured to allow the heating medium to flow therethrough and performs temperature adjustment of the drive device using the heating medium flowing therethrough; a third circuit that is configured to allow the heating medium to flow therethrough and includes a radiator that causes the heating medium flowing therethrough to exchange heat with outside air; and a fourth circuit that is configured to allow the heating medium to flow therethrough and connected to the chiller. The vehicle thermal management system further includes a control unit that causes battery cooling in which the first circuit and the fourth circuit are connected and drive device cooling in which the second circuit and the third circuit are connected to be executed, and during the execution of the battery cooling and the drive device cooling, executes heat absorption inhibition control that inhibits heat dissipated from the outdoor condenser from being absorbed by the radiator.

According to this configuration, during the battery cooling, the first circuit and the fourth circuit are connected, so that the heating medium that has absorbed heat from the battery exchanges heat with the refrigerant expanded by the chiller expansion valve in the refrigerant circuit through the chiller and lowers in temperature. This temperature-lowered heating medium is supplied to the battery through the first circuit, thereby cooling the battery. In the process of cooling the battery using the heating medium in this manner, heat is dissipated from the outdoor condenser in the refrigerant circuit.

On the other hand, during the drive device cooling, the second circuit and the third circuit are connected, so that the heating medium that has absorbed heat from the drive device exchanges heat with outside air through the radiator and lowers in temperature. This temperature-lowered heating medium is supplied to the drive device through the second circuit, thereby cooling the drive device.

During the execution of the battery cooling and the drive device cooling, for example, when the heat generation amount of the battery is large, the heat dissipation amount from the outdoor condenser in the refrigerant circuit increases. In such a situation, in the technique according to the present disclosure, the control unit executes the heat absorption inhibition control. Accordingly, since it is possible to inhibit heat dissipated from the outdoor condenser from being absorbed by the radiator, the drive device can be cooled.

The vehicle thermal management system may further include a drive device temperature sensor that obtains a temperature of the drive device. The control unit can determine whether the temperature of the drive device obtained by the drive device temperature sensor is equal to or higher than a first temperature, and execute the heat absorption inhibition control when it is determined that the temperature of the drive device obtained by the drive device temperature sensor is equal to or higher than the first temperature. Accordingly, when the temperature of the drive device is high and cooling of the drive device is required, heat dissipated from the outdoor condenser becomes less likely to be absorbed by the radiator, and thus, thermal management of the drive device can be appropriately performed.

The vehicle thermal management system may further include a battery temperature sensor that obtains a temperature of the battery. The control unit can determine whether the temperature of the battery obtained by the battery temperature sensor is equal to or higher than a second temperature, and execute the heat absorption inhibition control when it is determined that the temperature of the battery obtained by the battery temperature sensor is equal to or higher than the second temperature. Although not particularly limited, the first temperature can be set higher than the second temperature. That is, when the temperature of the battery is high and the amount of heat dissipated from the outdoor condenser is large, the heat dissipated from the outdoor condenser becomes likely to be absorbed by the radiator, and thus, thermal management of the drive device can be appropriately performed.

The control unit can execute the heat absorption inhibition control when it is determined that the temperature of the drive device obtained by the drive device temperature sensor is equal to or higher than the first temperature and it is determined that the temperature of the battery obtained by the battery temperature sensor is equal to or higher than the second temperature.

In the heat absorption inhibition control, the control unit may execute control that throttles the chiller expansion valve compared to before the execution of the heat absorption inhibition control. Accordingly, since it is possible to reduce the amount of heat dissipated from the outdoor condenser, the heat dissipated from the outdoor condenser becomes likely to be absorbed by the radiator.

The refrigerant circuit may include a cooling expansion valve that expands the refrigerant flowing out of the outdoor condenser, and a cooling evaporator into which the refrigerant expanded by the cooling expansion valve flows. In this case, the control unit can execute the heat absorption inhibition control during cooling operation in a vehicle cabin using the refrigerant circuit, and in the heat absorption inhibition control during the cooling operation, throttle the cooling expansion valve compared to before the execution of the heat absorption inhibition control. Since the amount of heat dissipated from the outdoor condenser can be reduced by throttling the cooling expansion valve, the heat dissipated from the outdoor condenser becomes less likely to be absorbed by the radiator.

The control unit can determine whether the temperature of the drive device obtained by the drive device temperature sensor exceeds a third temperature after executing the control that throttles the chiller expansion valve, and execute both the control that throttles the chiller expansion valve and the control that throttles the cooling expansion valve when it is determined that the temperature of the drive device obtained by the drive device temperature sensor exceeds the third temperature during the cooling operation. This makes it possible to further reduce the amount of heat dissipated from the outdoor condenser.

The control unit can determine whether the temperature of the drive device obtained by the drive device temperature sensor exceeds a fourth temperature higher than the third temperature during the cooling operation, and execute, in the heat absorption inhibition control, control that reduces a rotational speed of the compressor compared to before the execution of the heat absorption inhibition control when it is determined that the temperature of the drive device obtained by the drive device temperature sensor exceeds the fourth temperature during the cooling operation. By reducing the rotational speed of the compressor, it is possible to further reduce the amount of heat dissipated from the outdoor condenser. In this heat absorption inhibition control, the compressor may be stopped.

As described above, since it is possible to inhibit the radiator from absorbing waste heat of the outdoor condenser during cooling of the battery through the chiller, thermal management of the drive device can be appropriately performed.

### Brief Description of Drawings:

FIG. 1 is a functional block diagram of a vehicle thermal management system according to an embodiment of the present invention.
FIG. 2 is a diagram schematically showing an electric vehicle including the vehicle thermal management system.
FIG. 3 is a diagram showing the flow of a refrigerant and a coolant liquid during first cooling operation that cools a battery and a drive device.
FIG. 4 is a diagram showing the flow of the refrigerant and the coolant liquid during second cooling operation that cools the battery and the drive device.
FIG. 5 is a flowchart showing the flow of control by a control unit.
FIG. 6 is a timing chart when the control by the control unit is applied.
FIG. 7 is a diagram showing the flow of the refrigerant and the coolant liquid during third cooling operation that cools the battery and the drive device.

An embodiment of the present invention will be now described in detail on the basis of the drawings. Note that the following description of the preferred embodiment is merely illustrative in nature and is not intended to limit the present invention, its application, or its use. For example, the relative sizes and positional relationships of the members shown in the drawings are for the purpose of describing one embodiment and do not limit the present invention.

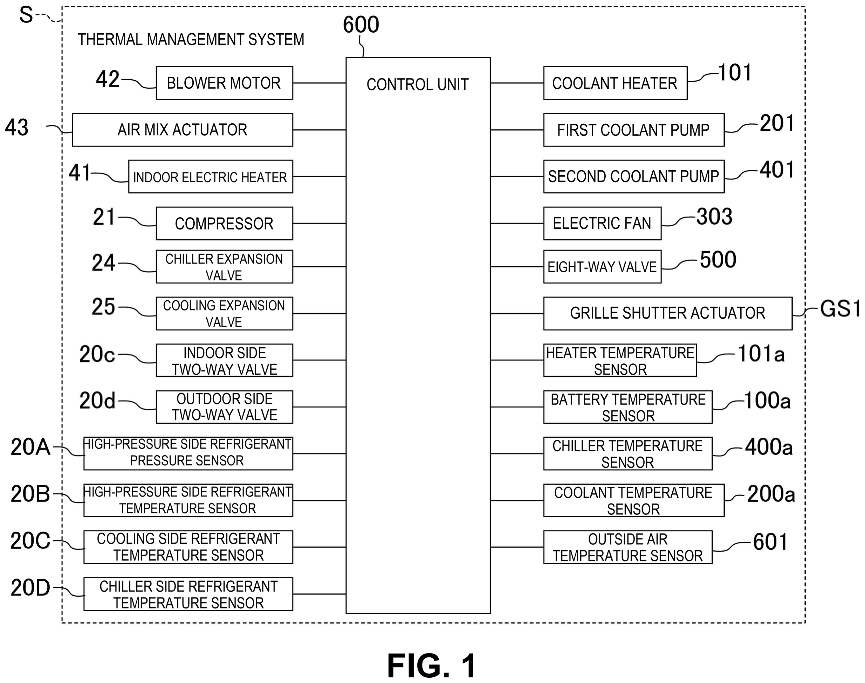

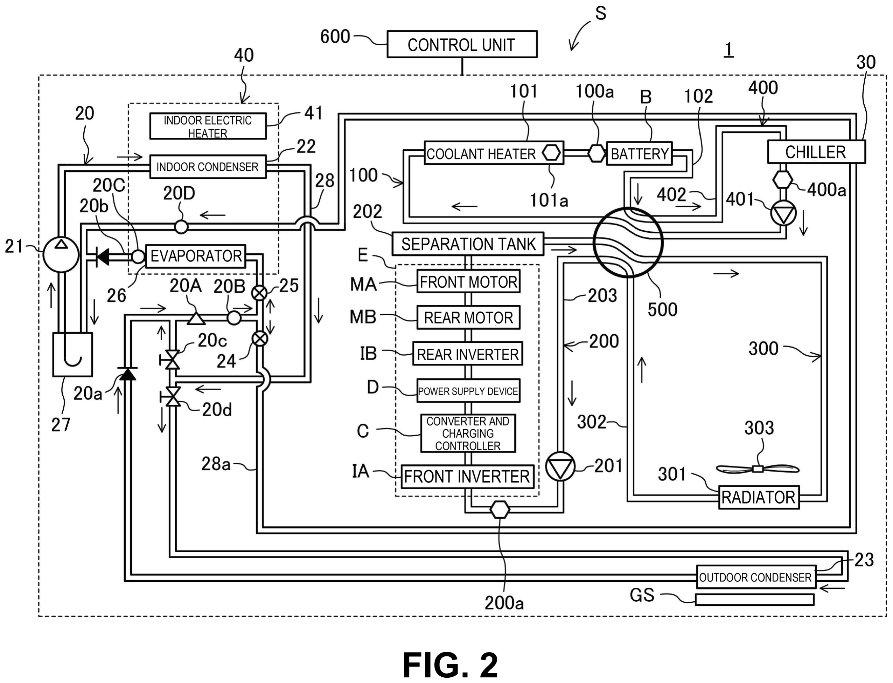

FIG. 1 is a functional block diagram of a vehicle thermal management system (hereinbelow, referred to as a "thermal management system") S according to the embodiment of the present invention. The thermal management system S is mounted on an electric vehicle 1 schematically shown in FIG. 2. That is, the electric vehicle 1 includes a front motor MA and a rear motor MB, and a battery B.

The front motor MA and the rear motor MB are driving motors, traveling motors that generate a driving force that is required to cause the electric vehicle 1 to travel. The front motor MA drives front wheels, and the rear motor MB drives rear wheels. Both the front motor MA and the rear motor MB may be mounted on the electric vehicle 1, or only one of them may be mounted on the electric vehicle 1.

The battery B is not a battery for an accessory but a high-capacity driving secondary battery that supplies electric power to the front motor MA and the rear motor MB. Although a typical example of the battery B is a lithium-ion battery, a rechargeable battery (e.g., a nickel-metal hydride battery) other than a lithium-ion battery can be applied to the present invention. In the case of a lithium-ion battery, its shape may be, for example, a pouch shape or a cylindrical shape. During braking of the electric vehicle 1, energy regenerated in the front motor MA and the rear motor MB is stored as electric power in the battery B.

The electric vehicle 1 includes a front inverter IA that controls the front motor MA, and a rear inverter IB that controls the rear motor MB. For example, the electric vehicle 1 may include a front e-axle (not shown) that includes the front motor MA, the front inverter IA, and a front transaxle (not shown). In addition, for example, the electric vehicle 1 may include a rear e-axle (not shown) that includes the rear motor MB, the rear inverter IB, and a rear transaxle (not shown).

The electric vehicle 1 includes a DC/DC converter and a charging controller (collectively designated by reference character C). The DC/DC converter and charging controller C is a device for passing, to the battery B, current supplied from an external charger (not shown) as a charging current of a magnitude appropriate for charging the battery B. That is, charging of the battery B is performed through the DC/DC converter and charging controller C. The charging of the battery B can be both normal charging that performs charging with an electric power of 11 kW at most and fast charging that performs charging with an electric power exceeding 11 kW. Hereinbelow, the "DC/DC converter and charging controller" will be simply referred to as the "charging controller". Alternating current during normal charging is input to the charging controller.

Although not an essential component, the electric vehicle 1 includes a power supply device D. The power supply device D is a device for supplying electric power of the battery B to the outside, and includes, for example, an inverter configured to output electric power of 100 V.

The front motor MA, the rear motor MB, the front inverter IA, the rear inverter IB, and the charging controller C are examples of elements that constitute a drive device E for causing the electric vehicle 1 to travel. The electric vehicle 1 travels by supplying electric power of the battery B to the drive device E. Although in the present embodiment the charging controller C is included as a part of the drive device E, the charging controller C does not have to be a component of drive device E. The power supply unit D may be or may not be included as a component of the drive device E. The drive device E may include a device related to travel of the electric vehicle 1 in addition to the devices described above. In addition, a device that does not require temperature adjustment may be excluded from the drive device E of the present invention.

Although the present embodiment describes a case in which the thermal management system S is mounted on the electric vehicle 1, this is not a limitation, and the thermal management system S can also be mounted on, for example, a plug-in hybrid vehicle. When the thermal management system S is mounted on a plug-in hybrid vehicle, similar effects can be also achieved.

The thermal management system S includes a refrigerant circuit 20 through which a refrigerant circulates, and a chiller 30 for using cold heat generated in the refrigerant circuit 20 for, for example, cooling the battery B. The thermal management system S includes, separately from the refrigerant circuit 20 through which the refrigerant circulates, for example, a first circuit 100, a second circuit 200, a third circuit 300, and a fourth circuit 400 as circuits configured to allow a heating medium to flow therethrough.

The first circuit 100 is a circuit for performing temperature adjustment of the battery B using the heating medium flowing therethrough. The second circuit 200 is a circuit for performing temperature adjustment of the drive device E using the heating medium flowing therethrough. The third circuit 300 is a circuit including a radiator 301 that causes the heating medium flowing therethrough to exchange heat with outside air to dissipate heat. The fourth circuit 400 is a circuit connected to the chiller 30. The heating medium flowing through the first circuit 100, the second circuit 200, the third circuit 300, and the fourth circuit 400 is, for example, a coolant liquid. In the following description, the heating medium is described as the coolant liquid.

The thermal management system S further includes an electric eight-way valve 500 for switching the connection state of the first circuit 100, the second circuit 200, the third circuit 300, and the fourth circuit 400, and a control unit 600 that controls each device included in the thermal management system S. The eight-way valve 500 may be included in the control unit 600. Although the specific configuration of each of the refrigerant circuit 20, the first circuit 100, the second circuit 200, the third circuit 300, and the fourth circuit 400 will be described first, the following description is an example, and other components that are not described may be included.

First, the refrigerant circuit 20 will be described. The refrigerant circuit 20 includes a compressor 21 that compresses the refrigerant, an indoor condenser 22, an outdoor condenser 23, a chiller expansion valve 24, a cooling expansion valve 25, a cooling evaporator 26, an accumulator 27, and a refrigerant pipe 28. The refrigerant pipe 28 is a member that connects the devices 21, 22, 23, 24, 25, 26, 27, and since the refrigerant pipe 28 is provided between the devices 21, 22, 23, 24, 25, 26, 27, the refrigerant circuit 20 includes a plurality of refrigerant pipes 28. In FIG. 2, to avoid complication of the drawing, not all the refrigerant pipes, but only one of them is designated by the reference numeral.

Although not shown, the compressor 21 is an electric compressor including an electric motor and a compression mechanism that is actuated by the electric motor. As shown in FIG. 1, the compressor 21 is connected to the control unit 600, and control unit 600 controls switching between ON and OFF and the rotational speed during ON. The compressor 21 operates with a combination of control according to a requirement on the air conditioning side and control according to a cooling requirement of the battery B and a cooling requirement of the drive device E.

The indoor condenser 22 is a heat exchanger that is connected to a refrigerant discharge port (not shown) of the compressor 21 through the refrigerant pipe 28 and into which the high-temperature and high-pressure refrigerant compressed by the compressor 21 flows. The indoor condenser 22 is disposed inside a vehicle cabin and is a device for heating the inside of the vehicle cabin. The vehicle cabin is a space in which an occupant stays.

The outdoor condenser 23 is a heat exchanger that is connected to a refrigerant outflow port (not shown) of the indoor condenser 22 through the refrigerant pipe 28 and into which the refrigerant that has flowed through the indoor condenser 22, that is, the refrigerant compressed by the compressor 21 flows. The outdoor condenser 23 is provided outside the vehicle cabin. The outside of the vehicle cabin is the outside of the space in which the occupant stays and is a space in which heat exchange with outside air can be performed. Examples of the outside of the vehicle cabin include a motor room (not shown) in which the front motor MA and the rear motor MB are housed, and a front portion of the vehicle (e.g., the inside of a front grille).

The electric vehicle 1 of the present embodiment includes a grille shutter GS. The grille shutter GS is a device for opening and closing an opening of the front grille (not shown), and includes a grille shutter actuator GS1 as shown in FIG. 1. The grille shutter actuator GS1 is connected to the control unit 600, is controlled by the control unit 600, and operates the grille shutter GS from an open state to a closed state and from a closed state to an open state. When the outdoor condenser 23 is provided inside the front grille, bringing the grille shutter GS into a closed state reduces an amount of outside air flowing into the outdoor condenser 23, and bringing the grille shutter GS into an open state increases the amount of outside air flowing into the outdoor condenser 23.

The cooling evaporator 26 is disposed inside the vehicle cabin and is a device for cooling the inside of the vehicle cabin or dehumidifying air supplied into the vehicle cabin. A refrigerant outflow port (not shown) of the outdoor condenser 23 and a refrigerant inflow port (not shown) of the cooling evaporator 26 are connected by the refrigerant pipe 28. Between the outdoor condenser 23 and the cooling evaporator 26 in the refrigerant pipe 28, a cooling expansion valve 25 that expands the refrigerant flowing out of the outdoor condenser 23 is provided. The refrigerant expanded by the cooling expansion valve 25 flows into the cooling evaporator 26. The cooling expansion valve 25 is connected to the control unit 600 and its degree of opening is changeable by the control unit 600.

The refrigerant pipe 28 includes a chiller pipe 28a that extends to the chiller 30. The chiller 30 is a heat exchanger that is connected between the chiller expansion valve 24 and the compressor 21 and configured to be capable of exchanging heat with the heating medium which will be described further below. The chiller 30 is disposed at a location away from the outdoor condenser 23 and the radiator 301.

The chiller pipe 28a branches off from a portion upstream of the cooling expansion valve 25 in the refrigerant pipe 28, and the refrigerant flowing out of the outdoor condenser 23 flows into the chiller pipe 28a. The chiller pipe 28a is provided with a chiller expansion valve 24 that expands the refrigerant flowing out of the outdoor condenser 23. A refrigerant inflow port (not shown) of the chiller 30 is connected to a portion downstream of the chiller expansion valve 24 in the chiller pipe 28a. Thus, the refrigerant expanded by the chiller expansion valve 24 flows into the chiller 30.

The downstream side of the chiller pipe 28a is connected to a refrigerant inflow port (not shown) of the accumulator 27. A refrigerant outflow port of the cooling evaporator 26 is also connected to the refrigerant inflow port of the accumulator 27. The accumulator 27 performs gas-liquid separation of the refrigerant flowing in through the chiller 30 and/or the cooling evaporator 26. A liquid refrigerant outflow port (not shown) of the accumulator 27 is connected to a refrigerant suction port (not shown) of the compressor 21.

The refrigerant circuit 20 is provided with a check valve 20a between the outdoor condenser 23, and the chiller expansion valve 24 and the cooling expansion valve 25. This check valve 20a prevents backflow of the refrigerant from the chiller expansion valve 24 and cooling expansion valve 25 side to the outdoor condenser 23 side.

The refrigerant circuit 20 is provided with a check valve 20b between the cooling evaporator 26, and the chiller 30 and the accumulator 27. This check valve 20b prevents backflow of the refrigerant from the chiller 30 and accumulator 27 side to the cooling evaporator 26 side.

The refrigerant circuit 20 includes an indoor side two-way valve 20c and an outdoor side two-way valve 20d. The indoor side two-way valve 20c and the outdoor side two-way valve 20d are composed of, for example, solenoid valves and connected to the control unit 600, and the opening and closing operations are controlled by the control unit 600. The indoor side two-way valve 20c is provided between the indoor condenser 22 and the cooling evaporator 26, and when the indoor side two-way valve 20c is brought into an open state by the control unit 600, the refrigerant flowing out of the indoor condenser 22 flows into the chiller expansion valve 24 and the cooling expansion valve 25, whereas when the indoor side two-way valve 20c is brought into a closed state by the control unit 600, the refrigerant flowing out of the indoor condenser 22 dose not flow into the chiller expansion valve 24 and the cooling expansion valve 25. That is, the indoor side two-way valve 20c controls the flow of the refrigerant to the cooling evaporator 26 and the chiller 30.

The outdoor side two-way valve 20d is provided between the indoor condenser 22 and the outdoor condenser 23. When the outdoor side two-way valve 20d is brought into an open state by the control unit 600, the refrigerant flowing out of the indoor condenser 22 flows into the outdoor condenser 23, whereas when the outdoor side two-way valve 20d is brought into a closed state by the control unit 600, the refrigerant flowing out of the indoor condenser 22 dose not flow into the outdoor condenser 23. That is, the outdoor side two-way valve 20d controls the flow of the refrigerant to the outdoor condenser 23.

The refrigerant circuit 20 includes a high-pressure side refrigerant pressure sensor 20A, a high-pressure side refrigerant temperature sensor 20B, a cooling side refrigerant temperature sensor 20C, and a chiller side refrigerant temperature sensor 20D. The high-pressure side refrigerant pressure sensor 20A is provided on the downstream side of the indoor condenser 22 and the outdoor condenser 23 and on the upstream side of the chiller expansion valve 24 and the cooling expansion valve 25, and obtains the pressure of the refrigerant flowing through this point. The refrigerant pressure obtained by the high-pressure side refrigerant pressure sensor 20A is output to the control unit 600.

The high-pressure side refrigerant temperature sensor 20B is provided on the downstream side of the indoor condenser 22 and the outdoor condenser 23 and on the upstream side of the chiller expansion valve 24 and the cooling expansion valve 25, and obtains the temperature of the refrigerant flowing through this point. The refrigerant temperature obtained by the high-pressure side refrigerant temperature sensor 20B is output to the control unit 600.

The cooling side refrigerant temperature sensor 20C is provided between the cooling evaporator 26 and the check valve 20b, and obtains the temperature of the refrigerant flowing through this point. That is, the cooling side refrigerant temperature sensor 20C obtains the temperature of the refrigerant that has flowed out of the cooling evaporator 26. The refrigerant temperature obtained by the cooling side refrigerant temperature sensor 20C is output to the control unit 600.

The chiller side refrigerant temperature sensor 20D is provided between the chiller 30 and the accumulator 27, and obtains the temperature of the refrigerant flowing through this point. That is, the chiller side refrigerant temperature sensor 20D obtains the temperature of the refrigerant that has flowed out of the chiller 30. The refrigerant temperature obtained by the chiller side refrigerant temperature sensor 20D is output to the control unit 600.

The indoor condenser 22 and the cooling evaporator 26 constitute a part of a vehicle air conditioning device 40. The vehicle air conditioning device 40 further includes an indoor electric heater 41 and a blower motor 42 (shown in FIG. 1). The blower motor 42 is a device for blowing outside air and/or indoor air to the indoor condenser 22, the cooling evaporator 26, and the indoor electric heater 41. The indoor electric heater 41 and the blower motor 42 are connected to the control unit 600 and controlled by the control unit 600.

The vehicle air conditioning device 40 is provided with an air mix actuator 43 (shown in FIG. 1) that operates an air mix damper (not shown). The air mix actuator 43 is connected to the control unit 600 and controlled by the control unit 600. By the air mix actuator 43 operating the air mix damper, temperature adjustment of air-conditioning air supplied into the vehicle cabin is enabled.

That is, in the vehicle air conditioning device 40, the whole of the air blown by the blower motor 42 is supplied to the cooling evaporator 26. Basically, during cooling operation, the air mix actuator 43 operates the air mixer damper such that the whole of the air passing through the cooling evaporator 26 is supplied into the vehicle cabin without passing through the indoor condenser 22 and the indoor electric heater 41.

On the other hand, during heating operation, the air mix actuator 43 operates the air mix damper such that part or the whole of the air passing through the cooling evaporator 26 is supplied to the indoor condenser 22 and the indoor electric heater 41 and heated, and then supplied into the vehicle cabin.

The control unit 600 determines how much amount of the air that has passed through the cooling evaporator 26 should be supplied to the indoor condenser 22 and the indoor electric heater 41 in accordance with a target temperature inside the vehicle cabin, and controls the air mix actuator 43 such that the determined amount of air is supplied to the indoor condenser 22 and the indoor electric heater 41. The indoor electric heater 41 includes a heating element that generates heat by the supply of electric power, such as a PTC element. The indoor electric heater 41 may be provided as needed.

The first circuit 100 is a circuit for performing temperature adjustment of the battery B and may also be referred to as a temperature adjustment circuit for the battery B. The first circuit 100 includes a coolant heater 101, and a first coolant pipe 102.

The coolant heater 101 is an electric heater that includes a heating element that generates heat by the supply of electric power, such as a PTC element, and is controlled by the control unit 600. When the temperature of the battery B is low to the extent of not being appropriate for charging and discharging, the control unit 600 actuates the coolant heater 101, thereby heating the coolant liquid. When the temperature of the battery B is within a temperature range appropriate for charging and discharging, or when the temperature of the battery B exceeds the temperature range appropriate for charging and discharging, the control unit 600 stops the coolant heater 101.

The first coolant pipe 102 is a pipe for circulating the coolant liquid in the first circuit 100 through the eight-way valve 500. An upstream end and a downstream end of the first coolant pipe 102 are connected to connection ports of the eight-way valve 500. The coolant heater 101 is provided on the upstream side of the first coolant pipe 102. The battery B is provided downstream of the coolant heater 101 in the first coolant pipe 102.

A heat exchanger (not shown) is provided in a portion of the first coolant pipe 102, and this heat exchanger is disposed in contact with an outer face of battery B. Heat exchange is performed between the coolant liquid flowing through the inside of the heat exchanger and the battery B, where when the temperature of the battery B is higher than the temperature of the coolant liquid, the battery B is cooled, and conversely, when the temperature of the battery B is lower than the temperature of the coolant liquid, the battery B is heated.

The first circuit 100 is provided with a heater temperature sensor 101a, and a battery temperature sensor 100a. The heater temperature sensor 101a is a sensor for obtaining the temperature of the coolant heater 101. The heater temperature obtained by the heater temperature sensor 101a is output to the control unit 600.

The battery temperature sensor 100a is a sensor for obtaining the temperature of the battery B. The battery temperature sensor 100a may obtain the temperature of the battery B, for example, by obtaining the temperature of a cell surface or the vicinity of a cell of the battery B or by obtaining the temperature of the coolant liquid in the vicinity of the battery B, and there is no particular limitation on the position or location where the battery temperature sensor 100a is provided. Information about the temperature of the battery B obtained by the battery temperature sensor 100a is output to the control unit 600.

The second circuit 200 is a circuit for performing temperature adjustment of the drive device E and may also be referred to as a temperature adjustment circuit for the drive device E. The second circuit 200 includes a first coolant pump 201, a separation tank 202, and a second coolant pipe 203.

The second coolant pipe 203 is a pipe for circulating the coolant liquid in the second circuit 200 through the eight-way valve 500. An upstream end and a downstream end of the second coolant pipe 203 are connected to connection ports of the eight-way valve 500. The first coolant pump 201 is provided on the upstream side of the second coolant pipe 203 and forms a flow that feeds the coolant liquid in the second coolant pipe 203 to the downstream side and circulates the coolant liquid. The drive device E is provided downstream of the first coolant pump 201 in the second coolant pipe 203. The drive device E is a cooling target device cooled by the coolant liquid flowing through the second circuit 200.

Although there is no particular limitation on the supply order of the coolant liquid to the front motor MA, the rear motor MB, the front inverter IA, the rear inverter IB, the charging controller C, and the power supply device D that are included in the drive device E, the second coolant pipe 203 is configured such that the coolant liquid is supplied in the following order in the present embodiment. That is, from the upstream side to the downstream side in the flow direction of the coolant liquid, the front inverter IA, the charging controller C, the power supply device D, the rear inverter IB, the rear motor MB, and the front motor MA are connected in series in this order through the second coolant pipe 203. For example, the front motor MA and the rear motor MB may be of a water-cooled type that is directly cooled by the coolant liquid or an oil-cooled type that is cooled by circulating oil. In the case of the oil-cooled type, the temperature of the oil can be reduced by causing the oil and the coolant liquid to exchange heat.

The front inverter IA, the charging controller C, the power supply device D, the rear inverter IB, and the like may also be an oil-cooled type or a water-cooled type. In the case of the water-cooled type, the front inverter IA, the charging controller C, the power supply device D, the rear inverter IB, and the like can be cooled using a heat exchange structure (not shown) provided in a portion of the second coolant pipe 203. That is, although there is no particular limitation on the structure, the front inverter IA, the charging controller C, the power supply device D, and the rear inverter IB can be cooled by heat exchange performed between the coolant liquid flowing through the heat exchange structure of the second coolant pipe 203, and the front inverter IA, the charging controller C, the power supply device D and the rear inverter IB.

The separation tank 202 is provided downstream of the drive device E in the second coolant pipe 203. The coolant liquid that has passed through the drive device E flows into the separation tank 202 and then flows to the eight-way valve 500. Although not shown, the separation tank 202 is connected to a reserve tank in which the coolant liquid is stored.

The second circuit 200 is provided with a coolant temperature sensor 200a. The coolant temperature sensor 200a is a sensor for obtaining the temperature of the coolant liquid in the second coolant pipe 203. The coolant temperature sensor 200a is disposed between the first coolant pump 201 and the drive device E.

The coolant temperature sensor 200a may constitute a drive device temperature sensor that obtains the temperature of the drive device E. For example, by the coolant temperature sensor 200a obtaining the temperature of the coolant flowing through the second circuit 200, it is possible to obtain an inlet temperature of the drive device E, that is, the temperature of the drive device E. In addition, the thermal management system S may include a drive device temperature sensor that obtains the temperature of the drive device E separately from the coolant temperature sensor 200a. For example, a temperature sensor that obtains the temperature of a relatively heat-sensitive device such as the front inverter IA or the rear inverter IB may be provided, and this temperature sensor may be used as the drive device temperature sensor. In this manner, there is no particular limitation on the position or location where the drive device temperature sensor is provided. Hereinbelow, a case in which the coolant temperature sensor 200a is used as the drive device temperature sensor will be described. Information about the temperature of the drive device E obtained by the coolant temperature sensor 200a is output to the control unit 600.

The third circuit 300 includes a third coolant pipe 302, and an electric fan 303, in addition to the radiator 301 for dissipating heat of the coolant liquid to outside air. The radiator 301 is provided outside the vehicle cabin, as with the outdoor condenser 23. In the present embodiment, the outdoor condenser 23 is provided inside the front grille in view of ensuring a sufficient ventilation amount, and the radiator 301 is disposed on the rear side (the downstream side in the outside air flow direction) of the outdoor condenser 23 that is provided inside the front grille. The outdoor condenser 23 and the radiator 301 may be modularized being stacked in the outside air flow direction, or the outdoor condenser 23 and the radiator 301 may be separately mounted on a vehicle body. In any case, the positional relationship between the outdoor condenser 23 and the radiator 301 is set such that outside air passing through the outdoor condenser 23 is introduced into the radiator 301.

The third coolant pipe 302 is a pipe for circulating the coolant liquid in the third circuit 300 through the eight-way valve 500. An upstream end and a downstream end of the third coolant pipe 302 are connected to connection ports of the eight-way valve 500.

The electric fan 303 is a device for feeding outside air to the radiator 301 and is provided, for example, inside the front grille. When the electric fan 303 is actuated, the control unit 600 controls the grille shutter actuator GS1 to open the grille shutter GS.

The flow direction of outside air formed by the electric fan 303 is the direction from the front side to the rear side of the vehicle. This flow direction of outside air is the same as the flow direction of outside air during travel of the electric vehicle 1. Since the outdoor condenser 23 is disposed on the front side of the radiator 301, the flow formed by the electric fan 303 causes outside air to pass through the outdoor condenser 23 and then flow into the radiator 301. The same flow of outside air also occurs during travel of the electric vehicle 1. The electric fan 303 is connected to the control unit 600, and the control unit 600 controls switching between ON and OFF and the rotational speed during ON in accordance with the degree of requirement of heat dissipation. The electric fan 303 operates not only for feeding outside air to the radiator 301 but also when the refrigerant circuit 20 is operating, thereby supplying outside air also to the outdoor condenser 23. Thus, it can be said that the electric fan 303 also constitutes a part of the refrigerant circuit 20.

The fourth circuit 400 is a circuit for cooling the coolant liquid using the chiller 30 and may also be referred to as a coolant liquid cooling circuit. The fourth circuit 400 includes a second coolant pump 401, and a fourth coolant pipe 402. The fourth coolant pipe 402 is a pipe for circulating the coolant liquid in the fourth circuit 400 through the eight-way valve 500. An upstream end and a downstream end of the fourth coolant pipe 402 are connected to connection ports of the eight-way valve 500.

The second coolant pump 401 is provided in the fourth coolant pipe 402 and forms a flow that feeds the coolant liquid in the fourth coolant pipe 402 to the downstream side and circulates the coolant liquid. The chiller 30 is provided upstream of the second coolant pump 401 in the fourth coolant pipe 402.

The chiller 30 is provided with a refrigerant channel through which the refrigerant supplied by the chiller pipe 28a of the refrigerant circuit 20 flows, and a coolant liquid channel through which the coolant liquid supplied by the fourth coolant pipe 402 flows. The refrigerant flowing through the refrigerant channel and the coolant liquid flowing through the coolant liquid channel can exchange heat. When the temperature of the coolant liquid is higher than the temperature of the refrigerant, it is possible to cool the coolant liquid.

The fourth circuit 400 is provided with a chiller temperature sensor 400a. The chiller temperature sensor 400a is a sensor for obtaining the temperature of the coolant liquid that has been cooled by the chiller 30. The temperature of the coolant liquid obtained by the chiller temperature sensor 400a is output to the control unit 600. The fourth coolant pipe 402 of the fourth circuit 400 is connected to a reserve tank (not shown).

( The control unit 600 includes a microcomputer including, for example, a central processing unit, a read only memory (ROM), a random access memory (RAM), and the like, various signal processing devices, an input/output interface, and the like. A program is stored in a storage unit (not shown) included in the control unit 600, and the central processing unit executes various processes and control as described below in accordance with the program.

The control unit 600 includes a part for controlling the vehicle air conditioning device 40, a part for controlling the first circuit 100, the second circuit 200, the third circuit 300, and the fourth circuit 400, and a part for controlling the eight-way valve 500, and these may be composed of a combination of hardware and software, or may be composed of hardware alone.

The part for controlling the vehicle air conditioning device 40, the part for controlling the first circuit 100, the second circuit 200, the third circuit 300, and the fourth circuit 400, and the part for controlling the eight-way valve 500 may be physically separated. In addition, the part for controlling the vehicle air conditioning device 40, the part for controlling the first circuit 100, the second circuit 200, the third circuit 300, and the fourth circuit 400, and the part for controlling the eight-way valve 500 may be integrated. In addition, the control unit 600 may include a part that controls the drive device E of the vehicle. In this manner, there is no particular limitation on the configuration of the control unit 600, and the control unit 600 may be configured to be capable of integrally controlling in-vehicle equipment and devices. For example, the control unit 600 may be configured to be capable of obtaining vehicle speed information, thereby enabling the control unit 600 to also perform control based on the vehicle speed.

An outside air temperature sensor 601 that obtains the outside air temperature is connected to the control unit 600, and the outside air temperature obtained by the outside air temperature sensor 601 (obtained outside air temperature) is input to the control unit 600. The outside air temperature sensor 601 is a component of the thermal management system S. Although there is no particular limitation on the position of the outside air temperature sensor 601, the position can be, for example, the upstream side in the outside air flow direction in the front grille. In addition, although not shown, an indoor air temperature sensor that obtains the temperature inside the vehicle cabin, an operation panel that adjusts the set temperature of air conditioning, and the like are also connected to the control unit 600.

In addition, the eight-way valve 500 is a device for connecting and disconnecting two or more of the first circuit 100, the second circuit 200, the third circuit 300, and the fourth circuit 400, and is controlled by the control unit 600 as described below. Note that the connections and disconnections of the first circuit 100, the second circuit 200, the third circuit 300, and the fourth circuit 400 shown below are examples, and other connections and disconnections can also be performed.

The control unit 600 controls the refrigerant circuit 20 and the vehicle air conditioning device 40 during air conditioning inside the vehicle cabin. In heating operation that heats the inside of the vehicle cabin, the control unit 600 actuates the compressor 21 of the refrigerant circuit 20 to supply the high-temperature and high-pressure refrigerant to the indoor condenser 22 to condense the refrigerant, thereby causing the indoor condenser 22 to serve as an air heater. The control unit 600 actuates the indoor electric heater 41 as needed, actuates the blower motor 42 of the vehicle air conditioning device 40, and further controls the air mix actuator 43 to operate the air mix damper such that air-conditioning air having a target temperature can be obtained. The obtained air-conditioning air is supplied to each part of the vehicle cabin.

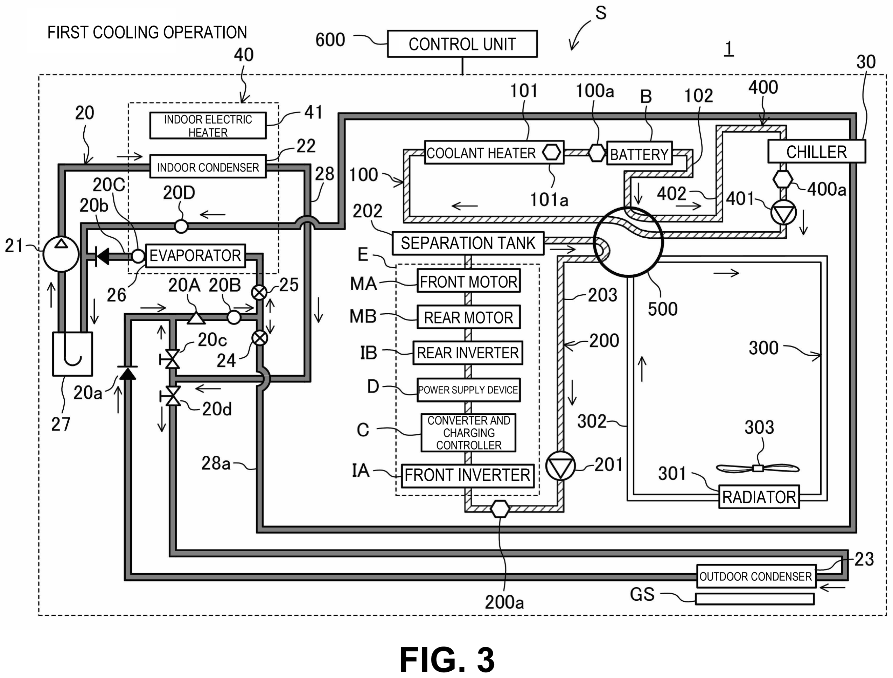

As shown in FIG. 3, in cooling operation that cools the inside of the vehicle cabin, the control unit 600 actuates the compressor 21 in the refrigerant circuit 20 to supply the high-temperature and high-pressure refrigerant to the indoor condenser 22 and the outdoor condenser 23 to condense the refrigerant, and then supplies the gas-liquid two-phase refrigerant expanded by the cooling expansion valve 25 to the cooling evaporator 26 to evaporate the refrigerant, thereby causing the cooling evaporator 26 to serve as an air cooler. The control unit 600 actuates the blower motor 42 of the vehicle air conditioning device 40 and further controls the air mix actuator 43 to operate the air mix damper such that air-conditioning air having a target temperature can be obtained. In FIG. 3, a part where the refrigerant flows is shown in black, and a part where the coolant liquid flows is shown with cross hatching. Note that when cooling of the inside of the vehicle cabin is not required, the blower motor 42 may be kept stopped. Accordingly, heat absorption by the cooling evaporator 26 is hardly performed.

When the battery B and the drive device E are cooled during first cooling operation shown in FIG. 3, the control unit 600 controls the eight-way valve 500 to connect the first coolant pipe 102 of the first circuit 100 and the fourth coolant pipe 402 of the fourth circuit 400 and connect the upstream end and the downstream end of the second coolant pipe 203 of the second circuit 200. At this time, the eight-way valve 500 disconnects the third circuit 300 from the first circuit 100, the second circuit 200, and the fourth circuit 400. The circuit formed by this is referred to as the first cooling operation circuit. Since the third circuit 300 is disconnected from the first circuit 100, the second circuit 200, and the fourth circuit 400, the coolant liquid in the third circuit 300 does not flow into the first circuit 100, the second circuit 200, and the fourth circuit 400.

Such connection and disconnection of the first circuit 100, the second circuit 200, the third circuit 300, and the fourth circuit 400 are enabled by the shape and position of connection passages formed inside the eight-way valve 500. Note that the eight-way valve 500 is an example of the configuration for performing the connection and disconnection of the first circuit 100, the second circuit 200, the third circuit 300, and the fourth circuit 400, and the connection and disconnection of the first circuit 100, the second circuit 200, the third circuit 300, and the fourth circuit 400 may be performed using a switching structure other than the eight-way valve 500.

Then, the control unit 600 actuates the second coolant pump 401. When the second coolant pump 401 is actuated, since the first coolant pipe 102 of the first circuit 100 and the fourth coolant pipe 402 of the fourth circuit 400 are connected, the coolant liquid flows from the second coolant pump 401 through the eight-way valve 500, the first coolant pipe 102, the coolant heater 101, the battery B, the eight-way valve 500, the fourth coolant pipe 402, and the chiller 30 in this order, and is suctioned into the second coolant pump 401. Since the battery B is being cooled, the coolant heater 101 is not actuated. Since the coolant liquid is cooled by exchanging heat with the refrigerant in the chiller 30 when the coolant liquid passes through the chiller 30, and the cooled coolant liquid can be supplied to the battery B, the battery B can be cooled. In addition, since the refrigerant in the chiller 30 is heated when the coolant liquid passes through the chiller 30, heating inside the vehicle cabin can be performed using the heat of the battery B. Note that the rotational speed of the second coolant pump 401 may be set in accordance with a cooling requirement of the battery B.

On the other hand, in the second circuit 200, the control unit 600 actuates the first coolant pump 201. When the first coolant pump 201 is actuated, the coolant liquid in the second circuit 200 flows through the second coolant pipe 203, passes through the front inverter IA, the charging controller C, the power supply device D, the rear inverter IB, the rear motor MB, and the front motor MA of the drive device E, then flows into the separation tank 202, and is then suctioned into the first coolant pump 201 through the eight-way valve 500. The rotational speed of the first coolant pump 201 may be set in accordance with a cooling requirement of the drive device E.

When only cooling of the battery B is required and cooling of the drive device E is not required, the first coolant pump 201 may be stopped to stop the flow of the coolant liquid in the second circuit 200. Even when only cooling of the battery B is required and cooling of the drive device E is not required, the first coolant pump 201 may be operated to allow the coolant liquid to flow in the second circuit 200 for cooling the control unit 600.

For example, when the heat generation amount of the battery B is large such as during fast charging of the battery B, the heat absorption amount of the refrigerant in the chiller 30 increases, and thus, the heat dissipation amount from the outdoor condenser 23 increases. When the heat dissipation amount from the outdoor condenser 23 increases, heat dissipated from the outdoor condenser 23 may be absorbed by the radiator 301 that is located on the downstream side of the outdoor condenser 23 in the outside air flow direction. When heat absorption is performed in the radiator 301, the temperature of the coolant liquid rises. If it were connected to the second circuit 200 at this time, the drive device E could not be cooled and a malfunction may occur in the drive device E.

In the first cooling operation of the present embodiment, since the third circuit 300 including the radiator 301 is disconnected from the second circuit 200 for cooling the drive device E, even when the heat dissipation amount from the outdoor condenser 23 is large, the heat dissipated from the outdoor condenser 23 does not affect the temperature of the coolant liquid in the second circuit 200 for cooling the drive device E. Accordingly, the drive device E can be cooled by the second circuit 200.

In addition, since the circulation of the coolant liquid in the third circuit 300 is stopped, the coolant liquid that has risen in temperature due to the radiator 301 absorbing heat dissipated from the outdoor condenser 23 is unlikely to flow to the eight-way valve 500. Accordingly, the coolant liquid that has risen in temperature in the radiator 301 does not heat the coolant liquid in the first circuit 100 through the eight-way valve 500, and the cooling performance of the battery B can be enhanced.

In operation in the first cooling operation circuit, the coolant liquid in the second circuit 200 circulates only in the second circuit 200, so that no active heat dissipation is performed for the coolant liquid in the second circuit 200. Under a condition where the heat dissipation amount of the drive device E is small, there is no problem with the operation in the first cooling operation circuit, but when the heat dissipation amount of the drive device E increases, cooling of the drive device E may become difficult in the operation in the first cooling operation circuit.

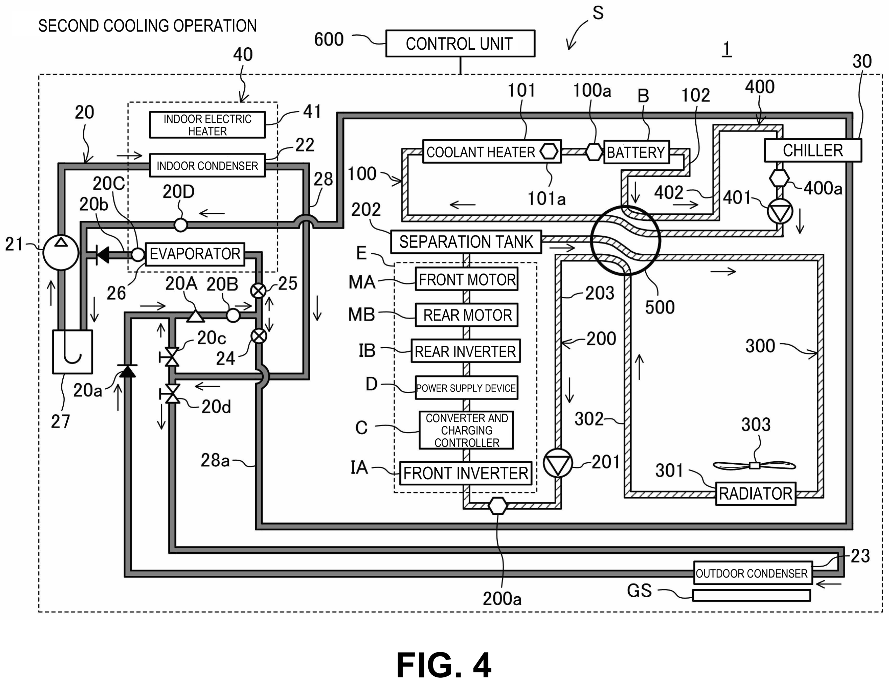

In such a case, as shown in FIG. 4, the control unit 600 performs switching from the first cooling operation to second cooling operation. When the battery B and the drive device E are cooled during the second cooling operation, the control unit 600 controls the eight-way valve 500 to connect the first coolant pipe 102 of the first circuit 100 and the fourth coolant pipe 402 of the fourth circuit 400 and connect the second coolant pipe 203 of the second circuit 200 and the third coolant pipe 302 of the third circuit 300. The first circuit 100 and the fourth circuit 400 are disconnected from the second circuit 200 and the third circuit 300. The circuit formed by this is referred to as the second cooling operation circuit.

Then, the control unit 600 actuates the second coolant pump 401 to circulate the coolant liquid through the first circuit 100 and the fourth circuit 400 as described above. In addition, the control unit 600 actuates the first coolant pump 201. When the first coolant pump 201 is actuated, since the second coolant pipe 203 of the second circuit 200 and the third coolant pipe 302 of the third circuit 300 are connected, the coolant liquid flows from the first coolant pump 201 through the drive device E, the separation tank 202, the eight-way valve 500, the third coolant pipe 302, the radiator 301, the eight-way valve 500, and the second coolant pipe 203 in this order, and is suctioned into the first coolant pump 201. Also in the second cooling operation, since the refrigerant in the chiller 30 is heated when the coolant liquid passes through the chiller 30, heating inside the vehicle cabin can be performed using the heat of the battery B.

Although the switching to the second cooling operation circuit enables cooling of the drive device E using the radiator 301, when the heat dissipation amount from the outdoor condenser 23 is large as described above, it may become difficult to cool the drive device E. To address this, the control unit 600 of the present embodiment is configured to execute heat absorption inhibition control that inhibits the heat dissipated from the outdoor condenser 23 in the refrigerant circuit 20 from being absorbed by the radiator 301 in the third circuit 300.

That is, as shown in FIG. 4, the control unit 600 causes battery cooling in which the first circuit 100 and the fourth circuit 400 are connected and drive device cooling in which the second circuit 200 and the third circuit 300 are connected to be executed by performing the switching to the second cooling operation circuit. The control unit 600 executes the heat absorption inhibition control during the execution of the battery cooling and the drive device cooling. Although the specific control will be described further below, in the heat absorption inhibition control, for example, the control unit 600 executes control that throttles the chiller expansion valve 24 compared to before the execution of the heat absorption inhibition control. By throttling the chiller expansion valve 24, the amount of refrigerant passing through the chiller 30 decreases, and it is possible to reduce the heat absorption amount of the refrigerant per unit time. As a result, the heat dissipation amount from the outdoor condenser 23 decreases, and the heat dissipated from the outdoor condenser 23 becomes less likely to be absorbed by the radiator 301. In this manner, the opening degree of the chiller expansion valve 24 is controlled to prevent heat dissipation to outside air on the outdoor condenser 23 side from obstructing heat dissipation to outside air on the radiator 301 side. In the heat absorption inhibition control, control that closes the chiller expansion valve 24 may be performed.

The heat absorption inhibition control is not limited to the control of the opening degree of the chiller expansion valve 24, and may be control of the opening degree of the cooling expansion valve 25. For example, the control unit 600 executes the heat absorption inhibition control during cooling operation in the vehicle cabin using the refrigerant circuit 20. During the cooling operation, since the refrigerant that has passed through the cooling expansion valve 25 flows into the cooling evaporator 26, the refrigerant absorbs heat in the cooling evaporator 26.

In the heat absorption inhibition control during the cooling operation, the control unit 600 throttles the cooling expansion valve 25 compared to before the execution of the heat absorption inhibition control. By throttling the cooling expansion valve 25, the amount of refrigerant passing through the cooling evaporator 26 decreases, and it is possible to reduce the heat absorption amount of the refrigerant per unit time. As a result, the heat dissipation amount from the outdoor condenser 23 decreases, and the heat dissipated from the outdoor condenser 23 becomes less likely to be absorbed by the radiator 301. In the heat absorption inhibition control, control that closes the cooling expansion valve 25 may be performed.

The heat absorption inhibition control is not limited to the control of the opening degrees of the chiller expansion valve 24 and the cooling expansion valve 25, and may be, for example, control that reduces the air blowing amount to the cooling evaporator 26. During the cooling operation, air is blown to the cooling evaporator 26 by the rotation of the blower motor 42, and when the air blowing amount to the cooling evaporator 26 is large, the heat absorption amount of the refrigerant per unit time in the cooling evaporator 26 increases, and thus, when the control unit 600 executes the heat absorption inhibition control during the cooling operation in the vehicle cabin using the refrigerant circuit 20, the control unit 600 executes control that reduces the rotational speed of the blower motor 42 compared to before the execution of the heat absorption inhibition control.

This reduces the air blowing amount to the cooling evaporator 26, which makes it possible to reduce the heat absorption amount of the refrigerant per unit time, and thus, the heat dissipation amount from the outdoor condenser 23 decreases and the heat dissipated from the outdoor condenser 23 becomes less likely to be absorbed by the radiator 301. In the heat absorption inhibition control, the rotational speed of the blower motor 42 may be zero, that is, the blower motor 42 may be stopped.

The heat absorption inhibition control may be control that reduces the supply amount of the coolant liquid by the second coolant pump 401 in the fourth circuit 400. For example, in the heat absorption inhibition control, the control unit 600 executes control that reduces the supply amount of the second coolant pump 401 compared to before the execution of the heat absorption inhibition control. Accordingly, since the amount of coolant liquid passing through the chiller 30 per unit time decreases, the heat absorption amount of the refrigerant in the chiller 30 can be reduced. As a result, the heat dissipation amount from the outdoor condenser 23 decreases, and the heat dissipated from the outdoor condenser 23 becomes less likely to be absorbed by the radiator 301.

The heat absorption inhibition control may be control that reduces the rotational speed of the compressor 21 in the refrigerant circuit 20. For example, in the heat absorption inhibition control, the control unit 600 executes control that reduces the rotational speed of the compressor 21 compared to before the execution of the heat absorption inhibition control. Accordingly, since the amount of refrigerant passing through the chiller 30 and the cooling evaporator 26 per unit time decreases, the heat absorption amount of the refrigerant in the chiller 30 and the cooling evaporator 26 can be reduced. As a result, the heat dissipation amount from the outdoor condenser 23 decreases, and the heat dissipated from the outdoor condenser 23 becomes less likely to be absorbed by the radiator 301.

The heat absorption inhibition control may be operation control of the air mix damper of the vehicle air conditioning device 40. For example, the control unit 600 may control the air mix actuator 43 to operate the air mix damper such that the air blowing amount to the indoor condenser 22 in the refrigerant circuit 20 becomes larger than before the execution of the heat absorption inhibition control when the vehicle air conditioning device 40 is operating. When the air blowing amount to the indoor condenser 22 increases, the heat dissipation amount from the outdoor condenser 23 decreases by an increase in the heat dissipation amount in the indoor condenser 22, and the heat dissipated from the outdoor condenser 23 becomes less likely to be absorbed by the radiator 301. Note that this control may be performed exclusively, for example, during heating. In addition, control that increases the rotational speed of the blower motor 42 may be performed together with the control of the air mix actuator 43.

In the heat absorption inhibition control, only any one of the control of the opening degree of the chiller expansion valve 24, the control of the opening degree of the cooling expansion valve 25, the control of the blower motor 42, the control of the second coolant pump 401, the control of the compressor 21, and the control of the air mix actuator 43 may be executed, or any two or more of them may be executed in combination. When two or more of the controls are executed in combination, the controls may be executed simultaneously, or an order of execution may be previously set, and the controls may be executed in order in accordance with the order of execution. In addition, it may be determined whether the vehicle air conditioning device 40 is performing cooling operation or heating operation, and the control of the opening degree of the cooling expansion valve 25 may be made executable only in the cooling operation.

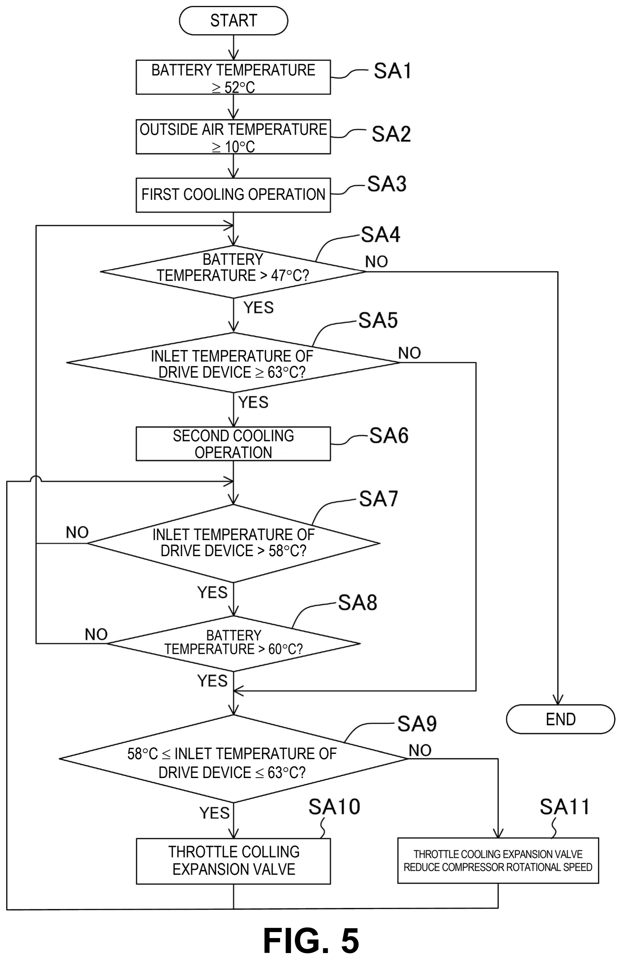

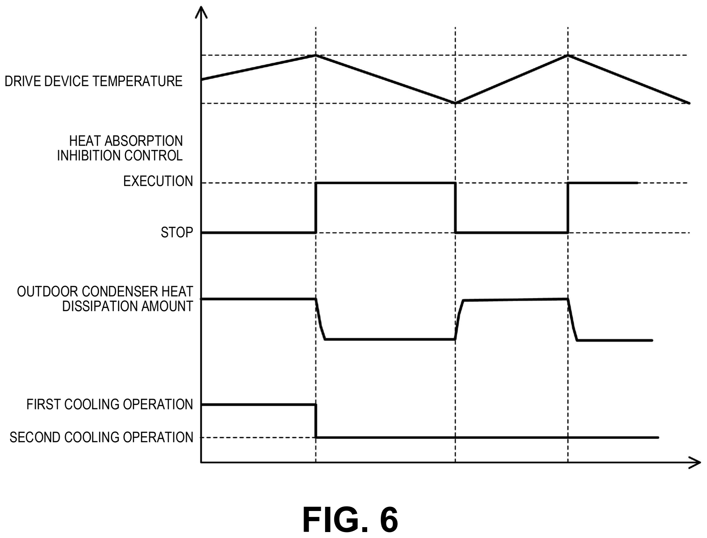

A specific example of the control by the control unit 600 will be described on the basis of the flowchart shown in FIG. 5 and the timing chart shown in FIG. 6. The flowchart shown in FIG. 5 starts, for example, at the timing when the power of the electric vehicle 1 is turned ON or at the timing when external charging of the battery B is started even if the power of the electric vehicle 1 is not turned ON. Step SA1 after the start is reached when the temperature of the battery B obtained by battery temperature sensor 100a (hereinbelow, simply referred to as the temperature of the battery B) is equal to or higher than a cooling start temperature. In this flowchart, 52°C is given as an example of the cooling start temperature, but this is not a limitation.

Step SA2 is reached when the outside air temperature obtained by the outside air temperature sensor 601 is equal to or higher than 10°C. When the outside air temperature is equal to or higher than 10°C, cooling of the battery B and cooling of the drive device E with outside air is not expected much, so the flow advances to step SA3, and the control unit 600 sets the circuit of the thermal management system S to the first cooling circuit shown in FIG. 3 and executes the first cooling operation that enables cooling of the battery B and the drive device E.

In step SA4, the control unit 600 determines whether the temperature of the battery B exceeds a cooling end temperature. The cooling end temperature is set to a temperature lower than the cooling start temperature. In this flowchart, 47°C is given as an example of the cooling end temperature, but this is not a limitation. When No is determined in step SA4 and the temperature of the battery B is equal to or lower than the cooling end temperature, the flowchart is finished since cooling of the battery B is not required. When the temperature of the battery B exceeds the cooling end temperature, the temperature is equal to or higher than the temperature that requires cooling.

When Yes is determined in step SA4 and the temperature of the battery B exceeds the cooling end temperature, the flow advances to step SA5. In step SA5, it is determined whether an inlet temperature of the drive device E obtained by the coolant temperature sensor 200a is in a high-temperature state. In this flowchart, 63°C is given as the temperature used in the determination in step SA5, but this is not a limitation. The temperature may be set to be equal to or lower than the temperature at which damage to the most thermally sensitive component of the drive device E can be restrained and equal to or higher than the temperature that requires cooling.

When Yes is determined in step SA5 and the inlet temperature of the drive device E obtained by the coolant temperature sensor 200a is in a high-temperature state, the flow advances to step SA6, and the control unit 600 sets the circuit of the thermal management system S to the second cooling circuit shown in FIG. 4, executes the second cooling operation, and executes the heat absorption inhibition control.

In this manner, the control unit 600 determines in step SA5 whether the temperature of the drive device E obtained by the coolant temperature sensor 200a is equal to or higher than 63°C (an example of the first temperature), and when it is determined that the temperature of the drive device E obtained by the coolant temperature sensor 200a is equal to or higher than 63°C, the control unit 600 executes the heat absorption inhibition control in step SA6.

In addition, the control unit 600 determines in step SA4 whether the temperature of the battery B obtained by battery temperature sensor 100a is equal to or higher than a temperature that requires cooling (second temperature), and when it is determined that the temperature of the battery B obtained by the battery temperature sensor 100a is equal to or higher than the temperature that requires cooling, the control unit 600 executes the heat absorption inhibition control in step SA6. The temperature used in the determination in step SA5 is set higher than the temperature used in the determination in step SA4. In the present embodiment, the control unit 600 executes the heat absorption inhibition control when not only it is determined that the temperature of the drive device E obtained by the coolant temperature sensor 200a is equal to or higher than 63°C, but also it is determined that the temperature of the battery B obtained by the battery temperature sensor 100a is equal to or higher than the temperature that requires cooling.

Note that the temperature used in the determination in step SA5 may be the same as the temperature used in the determination in step SA4, or the temperature used in the determination in step SA5 may be set lower than the temperature used in the determination in step SA4.

As shown in FIG. 6, when the temperature of the drive device E rises and becomes a high-temperature state, since switching from the first cooling operation to the second cooling operation is made and the heat absorption inhibition control is executed, the heat dissipation amount of the outdoor condenser 23 is reduced.

In step SA7 of the flowchart shown in FIG. 5, the control unit 600 determines whether the inlet temperature of the drive device E obtained by the coolant temperature sensor 200a is higher than 58°C. The temperature used in the determination in step SA7 is set lower than the temperature used in the determination in step SA5, and their difference may be, for example, between 3 and 7°C. When No is determined in step SA7 and the inlet temperature of the drive device E is equal to or lower than 58°C, the flow returns to step SA4. On the other hand, when Yes is determined in step SA7 and the inlet temperature of the drive device E is higher than 58°C, the flow advances to step SA8.

In step SA8, the control unit 600 determines whether the temperature of the battery B is higher than 60°C. The temperature used in the determination in step SA8 is set higher than the temperatures used in the determination in steps SA1, SA4. When No is determined in step SA8 and the temperature of the battery B is equal to or lower than 60°C, the flow returns to step SA4. On the other hand, when Yes is determined in step SA8 and the temperature of the battery B is higher than 60°C, the flow advances to step SA9. In addition, also when No is determined in step SA5, the flow advances to step SA9.

In step SA9, the control unit 600 determines whether the inlet temperature of the drive device E is within a range of 58°C or higher and 63°C or lower. When Yes is determined in step SA9 and the inlet temperature of the drive device E is within the range of 58°C or higher and 63°C or lower, the flow advances to step SA10. On the other hand, when No is determined in step SA9 and the inlet temperature of the drive device E is not within the range of 58°C or higher and 63°C or lower, the flow advances to step SA11.

In step SA10, as the heat absorption inhibition control, the cooling expansion valve 25 is throttled. That is, when the inlet temperature of the drive device E is high and the temperature of the battery B is high even after the chiller expansion valve 24 is throttled in step SA6, heat absorption in the cooling evaporator 26 is inhibited by throttling the cooling expansion valve 25, thereby enhancing the cooling capability of the drive device E and the battery B.

In this manner, after executing the control that throttles the chiller expansion valve 24, the control unit 600 determines whether the temperature of the drive device E obtained by the coolant temperature sensor 200a exceeds 58°C (an example of the third temperature), and when it is determined that the temperature of the drive device E obtained by the coolant temperature sensor 200a exceeds 58°C during the cooling operation, the control unit 600 executes both the control that throttles the chiller expansion valve 24 and the control that throttles the cooling expansion valve 25.

In step SA11, since the inlet temperature of the drive device E is higher than in the case step SA10 is reached, in addition to throttling the cooling expansion valve 25 as the heat absorption inhibition control, the rotation speed of the compressor 21 is reduced. Accordingly, since it is possible to reduce both the heat absorption amount in the cooling evaporator 26 and the heat absorption amount in the chiller 30, the cooling capability of the drive device E and the battery B can be further enhanced.

In this manner, the control unit 600 determines in step SA9 whether the temperature of the drive device E obtained by the coolant temperature sensor 200a exceeds 63°C (an example of the fourth temperature that is higher than the third temperature) during the cooling operation, and when it is determined that the temperature of the drive device E obtained by the coolant temperature sensor 200a exceeds 63°C during the cooling operation, the control unit 600 executes, in the heat absorption inhibition control, control that reduces the rotational speed of the compressor 21 compared to before the execution of the heat absorption inhibition control.

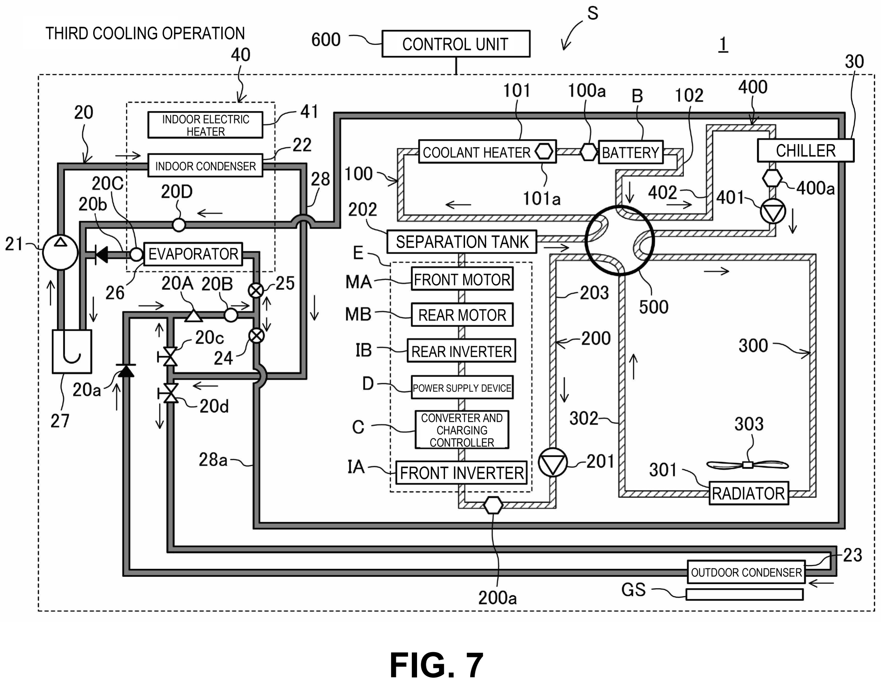

FIG. 7 shows the flow of the refrigerant and the flow of the coolant liquid when the battery B and the drive device E are cooled during third cooling operation. The third cooling operation is executed when there is a cooling requirement of the battery B and the outside air temperature is lower than 10°C, regardless of the air conditioning state and the traveling state. Although FIG. 7 shows a state in which the refrigerant in refrigerant circuit 20 is flowing, since the air conditioning state is irrelevant, the flowing state of the refrigerant in the refrigerant circuit 20 may be any state. In addition, although not shown, the control unit 600 may acquire that a user has operated a preconditioning switch or the like, and execute the third cooling operation when the outside air temperature is lower than 10°C and there is a cooling requirement of the battery B. In addition, the third cooling operation may be executed when there is a cooling requirement of the battery B during external charging.

When the battery B and the drive device E are cooled during the third cooling operation, the control unit 600 controls the eight-way valve 500 to connect first coolant pipe 102 of the first circuit 100, the second coolant pipe 203 of the second circuit 200, and the third coolant pipe 302 of the third circuit 300, and the fourth coolant pipe 402 of the fourth circuit 400. The circuit formed by this is referred to as the third cooling operation circuit.

Then, the control unit 600 actuates the first coolant pump 201 and/or the second coolant pump 401. When the first coolant pump 201 and/or the second coolant pump 401 is actuated, the coolant liquid flows from the radiator 301 through the eight-way valve 500, the first coolant pump 201, the drive device E, the separation tank 202, the eight-way valve 500, the coolant heater 101, the battery B, the eight-way valve 500, the chiller 30, the second coolant pump 401, the eight-way valve 500, and the radiator 301 in this order.

In the third cooling operation circuit, after the coolant liquid is cooled in the chiller 30 and dissipates heat to outside air through the radiator 301, the coolant liquid is used for cooling of the drive device E and the battery B. When the vehicle air conditioning device 40 is performing heating operation, the heating efficiency in the vehicle cabin can be enhanced using the heat absorbed in the chiller 30 by the refrigerant in the refrigerant circuit 20.

The embodiment described above is merely illustrative in all respects and should not be interpreted in a limited manner. Furthermore, any modifications and changes falling within the equivalent scope of the claims are all within the scope of the present invention.

### [Industrial Applicability]

As described above, the vehicle thermal management system according to the present disclosure can be used in, for example, an electric vehicle.
- 1: electric vehicle
- 20: refrigerant circuit
- 21: compressor
- 22: indoor condenser
- 23: outdoor condenser
- 24: chiller expansion valve
- 25: cooling expansion valve
- 26: cooling evaporator
- 30: chiller
- 100: first circuit
- 100a: battery temperature sensor
- 200: second circuit
- 200a: coolant temperature sensor (drive device temperature sensor)
- 300: third circuit
- 301: radiator
- 400: fourth circuit
- 600: control unit
- B: battery
- E: drive device
- S: thermal management sy

## Claims

1. A vehicle thermal management system (S) mounted on a vehicle (1) that travels by supplying electric power of a battery (B) to a drive device (E), the vehicle thermal management system (S) comprising:
a refrigerant circuit (20) including a compressor (21) that compresses a refrigerant, an outdoor condenser (23) into which the refrigerant compressed by the compressor (21) flows, and a chiller expansion valve (24) that expands the refrigerant flowing out of the outdoor condenser (23);
a chiller (30) connected between the chiller expansion valve (24) and the compressor (21) in the refrigerant circuit (20);
a first circuit (100) that is configured to allow a heating medium to flow therethrough and performs temperature adjustment of the battery (B) using the heating medium flowing therethrough;
a second circuit (200) that is configured to allow the heating medium to flow therethrough and performs temperature adjustment of the drive device (E) using the heating medium flowing therethrough;
a third circuit (300) that is configured to allow the heating medium to flow therethrough and includes a radiator (301) that causes the heating medium flowing therethrough to exchange heat with outside air;
a fourth circuit (400) that is configured to allow the heating medium to flow therethrough and connected to the chiller (30); and
a control unit (600) that causes battery cooling in which the first circuit (100) and the fourth circuit (400) are connected and drive device cooling in which the second circuit (200) and the third circuit (300) are connected to be executed, and during the execution of the battery cooling and the drive device cooling, executes heat absorption inhibition control that inhibits heat dissipated from the outdoor condenser (23) from being absorbed by the radiator (301).

2. The vehicle thermal management system according to claim 1, further comprising a drive device temperature sensor (200a) that obtains a temperature of the drive device (E), wherein
the control unit (600) determines whether the temperature of the drive device (E) obtained by the drive device temperature sensor (200a) is equal to or higher than a first temperature, and executes the heat absorption inhibition control when it is determined that the temperature of the drive device (E) obtained by the drive device temperature sensor (200a) is equal to or higher than the first temperature.

3. The vehicle thermal management system according to claim 2, further comprising a battery temperature sensor (100a) that obtains a temperature of the battery (B), wherein
the control unit (600) determines whether the temperature of the battery (B) obtained by the battery temperature sensor (100a) is equal to or higher than a second temperature, and executes the heat absorption inhibition control when it is determined that the temperature of the battery (B) obtained by the battery temperature sensor (100a) is equal to or higher than the second temperature.

4. The vehicle thermal management system according to claim 3, wherein
the first temperature is set higher than the second temperature.

5. The vehicle thermal management system according to claim 3 or 4, wherein
the control unit (600) executes the heat absorption inhibition control when it is determined that the temperature of the drive device (E) obtained by the drive device temperature sensor (200a) is equal to or higher than the first temperature and it is determined that the temperature of the battery (B) obtained by the battery temperature sensor (100a) is equal to or higher than the second temperature.

6. The vehicle thermal management system according to any one of claims 1 to 5,
wherein, in the heat absorption inhibition control, the control unit (600) executes only any one of:
control of an opening degree of the chiller expansion valve (24),
control of an opening degree of a cooling expansion valve (25),
control of a blower motor (42),
control of a second coolant pump (401),
control of a compressor (21), and
control of an air mix actuator (43),
or executes any two or more of these controls in combination.

7. The vehicle thermal management system according to any one of claims 1 to 6, wherein
in the heat absorption inhibition control, the control unit (600) executes control that throttles the chiller expansion valve (24) compared to before the execution of the heat absorption inhibition control.

8. The vehicle thermal management system according to any one of claims 1 to 7, wherein
the refrigerant circuit (20) includes a cooling expansion valve (25) that expands the refrigerant flowing out of the outdoor condenser (23), and a cooling evaporator (26) into which the refrigerant expanded by the cooling expansion valve (25) flows, and
the control unit (600) executes the heat absorption inhibition control during cooling operation in a vehicle cabin using the refrigerant circuit (20), and in the heat absorption inhibition control during the cooling operation, throttles the cooling expansion valve (25) compared to before the execution of the heat absorption inhibition control.

9. The vehicle thermal management system according to any one of claims 1 to 8, wherein
the control unit (600) determines whether the temperature of the drive device (E) obtained by the drive device temperature sensor (200a) exceeds a third temperature after executing the control that throttles the chiller expansion valve (24), and executes both the control that throttles the chiller expansion valve (24) and the control that throttles the cooling expansion valve (25) when it is determined that the temperature of the drive device (E) obtained by the drive device temperature sensor (200a) exceeds the third temperature during the cooling operation.

10. The vehicle thermal management system according to any one of claims 1 to 9, wherein
the control unit (600) determines whether the temperature of the drive device (E) obtained by the drive device temperature sensor (200a) exceeds a fourth temperature higher than the third temperature during the cooling operation, and executes, in the heat absorption inhibition control, control that reduces a rotational speed of the compressor (21) compared to before the execution of the heat absorption inhibition control when it is determined that the temperature of the drive device (E) obtained by the drive device temperature sensor (200a) exceeds the fourth temperature during the cooling operation.

11. A method for thermally managing a vehicle (1) that travels by supplying electric power of a battery (B) to a drive device (E), the method comprising:
operating a refrigerant circuit (20) including a compressor (21), an outdoor condenser (23) into which refrigerant compressed by the compressor (21) flows, and a chiller expansion valve (24) that expands refrigerant flowing out of the outdoor condenser (23);
cooling the battery (B) by connecting a first circuit (100), through which a heating medium flows and which performs temperature adjustment of the battery (B), to a fourth circuit (400) connected to a chiller (30) provided in the refrigerant circuit (20), such that the heating medium exchanges heat with the refrigerant in the chiller (30);
cooling the drive device (E) by connecting a second circuit (200), through which the heating medium flows and which performs temperature adjustment of the drive device (E), to a third circuit (300) including a radiator (301) that causes the heating medium to exchange heat with outside air; and
during simultaneous execution of the battery cooling and the drive device cooling, executing heat absorption inhibition control that inhibits heat dissipated from the outdoor condenser (23) from being absorbed by the radiator (301).

12. The method according to claim 11, further comprising:
obtaining a temperature of the drive device (E) by a drive device temperature sensor (200a); and
determining whether the obtained temperature of the drive device (E) is equal to or higher than a first temperature,
wherein the heat absorption inhibition control is executed when it is determined that the temperature of the drive device (E) is equal to or
higher than the first temperature.

13. The method according to claim 12, further comprising:
obtaining a temperature of the battery (B) by a battery temperature sensor (100a); and
determining whether the obtained temperature of the battery (B) is equal to or higher than a second temperature,
wherein the heat absorption inhibition control is executed when it is determined that the temperature of the battery (B) is equal to or higher than the second temperature.

14. The method according to claim 13,
wherein the first temperature is set higher than the second temperature.

15. The method according to claim 13 or 14, further comprising:
executing the heat absorption inhibition control only when it is determined that
the obtained temperature of the drive device (E) is equal to or higher than the first temperature and
the obtained temperature of the battery (B) is equal to or higher than the second temperature.
